# EUROPEAN PATENT APPLICATION

(11) **EP 4 579 773 A1**
(43) Date of publication of application: **02.07.2025**
(21) Application number: 24216389.7
(22) Date of filing: 29.11.2024
(51) Int. Cl.: H01M 4/04, H01M 4/1391, H01M 10/0525, H01M 10/54

(54) **METHOD FOR MANUFACTURING POSITIVE ELECTRODE ACTIVE MATERIAL**

(30) Priority: 28.12.2023 JP 2023222719
(71) Applicant: Prime Planet Energy & Solutions, Inc., Chuo-ku, Tokyo 103-0022 (JP)
(72) Inventor: YAMAMOTO, Yuji, Tokyo 103-0022 (JP)
(74) Representative: Kuhnen & Wacker Patent- und Rechtsanwaltsbüro PartG mbB

(57) **Abstract**

The present disclosure has an object to provide a method for manufacturing a positive electrode active material in which performance degradations of a capacity characteristic and an output characteristic are suppressed. The herein disclosed method for manufacturing the positive electrode active material includes a preparation step for preparing an end material of a positive electrode plate containing a positive electrode active material that has never been performing intercalation and deintercalation of a charge carrier, an alkaline liquid immersing step for immersing the end material into an alkaline liquid, a solid-liquid separation step for performing a solid-liquid separation on the alkaline liquid after the alkaline liquid immersing step so as to collect the solid substance, a classifying step for classifying the collected solid substance into a fine particle fraction and a coarse particle fraction, and a baking step for baking the coarse particle fraction.

## Description

### BACKGROUND

A technique disclosed herein relates to a method for manufacturing a positive electrode active material.

### [Background Art]

Recently, an electricity storage device is suitably used for a portable power supply of a personal computer, a portable terminal, or the like, a power supply for driving automobiles, such as battery electric vehicle (BEV), hybrid electric vehicle (HEV), and plug-in hybrid electric vehicle (PHEV), or the like.

For a positive electrode used in the electricity storage device, a positive electrode active material is generally used. Recently, a demand for a collecting technique is increased that is for collecting a metal (for example, lithium, nickel, cobalt, or the like) contained in the positive electrode active material from a end material of a positive electrode plate or the like, and that is for reusing it as a material of the electricity storage device. Further, in examining the above described collecting technique, a development of a technique has been proceeded that is for collecting and recycling the positive electrode active material from the positive electrode plate intactly as the positive electrode active material, without once making the positive electrode active material go back to a metal level. As an example of the technique described above, for example, JP 2023-521497 A discloses a collecting method of the electrode active material that includes a stage of crushing and grinding a waste current collector and a waste electrode containing the electrode active material, a stage of classifying the crushed and grinded waste electrode described above and then collecting the electrode active material, and a stage of mixing the above described electrode active material and an alkaline solution and then selectively remove an aluminum impurity in the above described electrode active material.

### SUMMARY

The positive electrode plate may contain a solid carbon, in addition to the positive electrode active material. The technique disclosed in JP 2023-521497 A has some fears that, at the classify time, a solid carbon is adhered to the crushed positive electrode current collector (the aluminum impurity) and thus remains in the positive electrode active material (an electrode active material). In addition, the solid carbon is not dissolved in the alkaline solution, and thus remains as the impurity in the positive electrode active material. Furthermore, based on a study of the present inventor, it has been found that, when the solid carbon and the positive electrode active material are baked, the solid carbon and a charge carrier contained in the positive electrode active material response and then a capacity characteristic and output characteristic of the obtained positive electrode active material are worse in comparison with a brand-new positive electrode active material (at a stage of being contained in the positive electrode plate).

The present disclosure has been made in view of the above-described circumstances, and has an object of providing a method for manufacturing a positive electrode active material in which performance degradations of the capacity characteristic and the output characteristic are suppressed.

With respect to the above described issue, a method for manufacturing a positive electrode active material including a below described configuration (hereinafter, which may be simply referred to as "manufacturing method", too) is provided.

The herein disclosed method for manufacturing a positive electrode active material includes a preparation step for preparing an end material of a positive electrode plate containing a positive electrode active material that has never been performing intercalation and deintercalation of a charge carrier, an alkaline liquid immersing step for immersing the end material into an alkaline liquid, a solid-liquid separation step for performing a solid-liquid separation on the alkaline liquid after the alkaline liquid immersing step so as to collect a solid substance, a classifying step for classifying the collected solid substance into a fine particle fraction and a coarse particle fraction, and a baking step for baking the coarse particle fraction.

In configurations of the above described manufacturing method, the classifying step is performed on the solid substance obtained through the alkaline liquid immersing step and the solid-liquid separation step, so that a solid carbon is physically removed. By doing this, it is possible to suppress a response of a solid carbon and a charge carrier in the coarse particle fraction at the baking step, and it is possible to obtain the positive electrode active material in which deteriorations of the capacity characteristic and the output characteristic are suppressed.

### BRIEF DESCRIPTION OF THE DRAWINGS

FIG. 1 is a schematic cross section view of a positive electrode plate in accordance with a present embodiment that is shown along a thickness direction and a width direction.
FIG. 2 is a flowchart that is for explaining a method for manufacturing a positive electrode active material in accordance with the present embodiment.
FIG. 3 is a flowchart that is for explaining a method for manufacturing a positive electrode active material in accordance with a modified example.

### DETAILED DESCRIPTION

An embodiment of a herein disclosed technique would be explained below while referring to drawings. Incidentally, the matters other than matters particularly mentioned in this specification, and required for practicing the present disclosure can be grasped as design matters of those skilled in the art based on the related art in the present field. The herein disclosed technique can be executed based on the contents disclosed in the present specification, and the technical common sense in the present field. In addition, a wording "A to B" representing a range in the present specification is to semantically cover a meaning of being equal to or more than A and not more than B, and further cover meanings of being "preferably more than A" and "preferably less than B".

In the present specification, a term "electricity storage device" represents a general device that is capable of repeatedly performing electric charge and discharge by making a charge carrier move between a positive electrode and a negative electrode through an electrolyte. The electricity storage device is a concept that semantically covers a secondary battery, such as lithium ion secondary battery and nickel hydrogen battery, and covers a capacitor, such as lithium ion capacitor and electric double layer capacitor.

### 1. Positive electrode plate

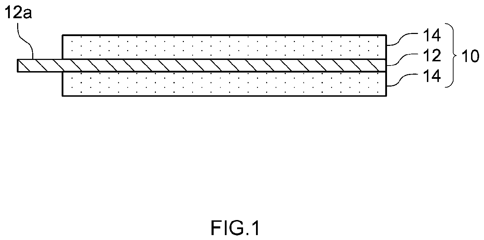

The method for manufacturing the positive electrode active material in accordance with the present embodiment collects a positive electrode active material from a positive electrode plate so as to manufacture the positive electrode active material. As an example of the positive electrode plate here, it is possible to use a positive electrode plate of a lithium ion secondary battery that uses a lithium ion as the charge carrier. Below, while the positive electrode plate of the lithium ion secondary battery is used as an example, the positive electrode plate would be explained in detail. However, it is not intended to restrict the herein disclosed technique into descriptions of the embodiment. FIG. 1 is a schematic cross section view of the positive electrode plate in accordance with the present embodiment, shown along a thickness direction and a width direction.

As shown in FIG. 1, the positive electrode plate 10 includes a positive electrode current collector 12 and a positive electrode active material layer 14 that is supported by the positive electrode current collector 12. The positive electrode active material layer 14 is, in an illustrated example, provided on both surfaces of the positive electrode current collector 12. However, the positive electrode active material layer 14 may be provided on one surface of the positive electrode current collector 12.

As shown in FIG. 1, a positive electrode active material layer non-formation part 12a on which the positive electrode active material layer 14 is not provided may be provided at one end of the positive electrode plate 10 in the width direction. The positive electrode active material layer non-formation part 12a is a portion where the positive electrode current collector 12 is exposed, and has a function as an electrical collector part.

As the positive electrode current collector 12, it is possible to use a well known positive electrode current collector that is used for a conventional electricity storage device, and it is possible, as an example, to use a sheet or a foil made of aluminum from a perspective of a good electrically conductive property. From a perspective of making the positive electrode current collector be easily dissolved into an alkaline liquid at a later described alkaline liquid immersing step, the aluminum foil is preferable as the positive electrode current collector 12.

A dimension of the positive electrode current collector 12 can be suitably changed on the basis of a capacity or a size of the electricity storage device, and thus is not particularly restricted. In a case where the aluminum foil is used as the positive electrode current collector 12, the thickness is not particularly restricted but may be, for example, equal to or more than 5 µm and not more than 35 µm.

The positive electrode active material layer 14 is a composite material layer that contains the positive electrode active material, or the like. The positive electrode active material is a material that can reversibly store and release the charge carrier (for example, lithium or the like). In a case where the lithium ion is used as the charge carrier, it is possible as an example of the above described positive electrode active material to use a lithium-transition metal complex oxide, such as lithium nickel based composite oxide, lithium cobalt based composite oxide, lithium manganese based composite oxide, lithium nickel manganese based composite oxide, lithium manganese cobalt based composite oxide, lithium nickel cobalt based composite oxide, and lithium nickel cobalt manganese based composite oxide. In addition, another example of the positive electrode active material, it is possible to use a lithium transition metal phosphate compound, such as lithium iron phosphate, lithium manganese phosphate, and lithium manganese iron phosphate.

Incidentally, the wording "lithium nickel cobalt manganese based composite oxide" in the present specification is a term that semantically covers not only an oxide whose constituent element is Li, Ni, Co, Mn, or O, but also an oxide which contains 1 kind, 2 kinds or more of additive elements other than them. An example of the above described additive elements is a transition metal element, a typical metal element, or the like, such as Mg, Ca, Al, Ti, V, Cr, Y, Zr, Nb, Mo, Hf, Ta, W, Na, Fe, Zn, and Sn. In addition, the additive element may be a semimetal element, such as B, C, Si, and P, or a non-metal element, such as S, F, Cl, Br, and I. This can be applied similarly to the above described lithium nickel based composite oxide, lithium cobalt based composite oxide, lithium manganese based composite oxide, lithium nickel manganese based composite oxide, lithium manganese cobalt based composite oxide, lithium nickel cobalt based composite oxide, or the like.

The positive electrode active material may be, for example, a primary particle or in a form of a secondary particle. Incidentally, the term "primary particle" in the present specification represents a minimum unit of a particle configuring the positive electrode active material, and particularly represents a smallest unit decided on the basis of an external geometric form. Additionally, in the present specification, a mass of the above described primary particles is referred to as "secondary particle". The secondary particle may have a form, for example, in which the primary particles equal to or more than 2 and not more than 100 gathered.

A D50 particle diameter (a mean particle diameter) of the positive electrode active material is typically, which is not particularly restricted, equal to or more than 0.05 µm and not more than 25 µm for a primary particle unit, for example, equal to or more than 1 µm and not more than 20 µm, or preferably equal to or more than 3 µm and not more than 15 µm. Incidentally, in the present specification, the term "D50 particle diameter" means a particle diameter corresponding to a cumulative frequency 50 volume% from a fine particle side having a smaller particle diameter, with respect to a particle size distribution on a volume basis by a laser diffraction and scattering method. Similarly, the term "D10 particle diameter" in the present specification means a particle diameter corresponding to a cumulative frequency 10 volume% from the fine particle side having the smaller particle diameter, with respect to the particle size distribution on the volume basis by the laser diffraction and scattering method. Therefore, it is possible to obtain the D50 particle diameter and the D10 particle diameter, based on the well known laser diffraction and scattering type of the particle size distributions.

The positive electrode active material layer 14 could contain an arbitrary component other than the positive electrode active material, as needed. As the arbitrary component described above, it is possible to use an electrically conducting material, a binder, or the like.

As the electrically conducting material, it is possible to use, for example, a solid carbon, such as carbon black, coke, active carbon, graphite (natural graphite and reformed substance of it, and artificial graphite), carbon fiber (PAN-based carbon fiber, pitch-based carbon fiber), fullerene, and graphene. Among them, from a perspective of having a particularly superior electrically conductive property, the carbon black can be used suitably. As a specific example of the above described carbon black, it is possible to use an acetylene black, a furnace black, a ketjen black, a thermal black, or the like.

A D50 particle diameter of the electrically conducting material is typically smaller than the D50 particle diameter of the positive electrode active material. Although not particularly restricted, it is typically 1 to 200 nm, or may be, for example, in a range of 10 to 100 nm.

As the binder, it is possible to use a polymer capable of being dissolved or distributed into a solvent to be used, and thus it is not particularly restricted. For example, it is possible to use polyvinylidene fluoride (PVDF), styrene butadiene rubber (SBR), polytetrafluoroethylene (PTFE), carboxymethyl cellulose (CMC), or the like.

Above, as an example of a collection object of the manufacturing method in accordance with the present embodiment, the positive electrode plate 10 used for the lithium ion secondary battery has been explained. However, the herein disclosed manufacturing method is not restricted only to the method whose collection object is the positive electrode plate 10 used for the lithium ion secondary battery having the above described configuration.

### 2. Method for manufacturing positive electrode active material

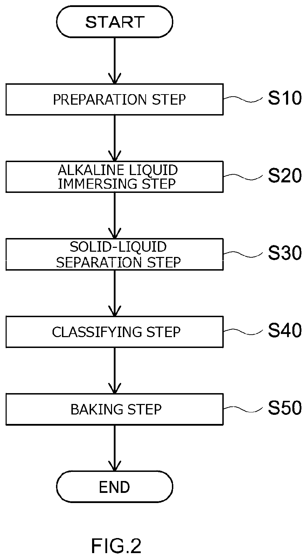

Below, the method for manufacturing the positive electrode active material in accordance with the present embodiment will be described. FIG. 2 is a flowchart that is for explaining the method for manufacturing the positive electrode active material in accordance with the present embodiment.

As shown in FIG. 2, the method for manufacturing the positive electrode active material in accordance with the present embodiment includes a preparation step S10, an alkaline liquid immersing step S20, a solid-liquid separation step S30, a classifying step S40, and a baking step S50. In addition, the herein disclosed manufacturing method may include another step at an arbitrary stage, and the other manufacturing processes may be similar to conventional manufacturing processes. Below, each of the steps will be described.

### (1) Preparation step S10

At the preparation step S10, the end material of the positive electrode plate is prepared. The term "end material of the positive electrode plate" in the present specification refers to an end material of a positive electrode plate containing a positive electrode active material that has never been performing intercalation and deintercalation of a charge carrier. In other words, the term "end material of the positive electrode plate" semantically includes an end material of a positive electrode plate generated during the manufacture of the electricity storage device, a positive electrode plate having become a non-standard product, a positive electrode plate taken out from a battery assembly having become a non-standard product before the electric charge and discharge, and the like. In the present embodiment, the end material of the positive electrode plate is prepared. Incidentally, regarding the detail of the positive electrode plate, overlapping explanations are omitted because of having been already described.

### (2) Alkaline liquid immersing step S20

At the alkaline liquid immersing step S20, the positive electrode plate prepared at the preparation step S10 is immersed into the alkaline liquid. By doing this, the positive electrode current collector (aluminum) of the positive electrode plate is dissolved into the alkaline liquid. On the other hand, the positive electrode active material layer of the positive electrode plate is not dissolved into the alkaline liquid, and thus it precipitates as a solid substance in the alkaline liquid.

As a specific example of the alkaline liquid used at the alkaline liquid immersing step S20, it is possible to use a lithium hydroxide (LiOH) solution, a sodium hydroxide (NaOH) solution, a potassium hydroxide (KOH) solution, or the like. Among them, it is possible to suitably use the lithium hydroxide solution and the sodium hydroxide solution as the alkaline liquid. These solutions show strong alkaline, and in a case where the above described alkaline liquid is used at the alkaline liquid immersing step S20, it is possible to selectively dissolve the positive electrode current collector while suppressing the positive electrode active material of the positive electrode plate from being damaged.

It is suitable that a pH of the alkaline liquid used at the alkaline liquid immersing step S20 is equal to or more than pH 12 (more preferably, it is equal to or more than pH 13). In a case where the pH of the alkaline liquid is too low, the positive electrode current collector is not dissolved into the alkaline liquid, and additionally, there are some fears of damaging the positive electrode active material in the collection object. On the other hand, in a case where the pH of the alkaline liquid is too high, a dissolution response of the positive electrode current collector is significant, and thus there is a possibility of causing a structure destruction of the positive electrode active material. Accordingly, the pH of the alkaline liquid used at the alkaline liquid immersing step S20 is suitably equal to or less than pH 14 (more preferably, it is equal to or less than pH 13.5).

A temperature of the alkaline liquid at the alkaline liquid immersing step S20 is suitably, which is not particularly restricted, equal to or more than 20°C (more preferably, it is equal to or more than 30°C, or furthermore suitably, it is equal to or more than 40°C). By doing this, the dissolution of the positive electrode current collector into the alkaline liquid is promoted, and thus it is possible to shorten a time of the alkaline liquid immersing step S20. On the other hand, an upper limit value of the temperature of the alkaline liquid at the alkaline liquid immersing step S20 may be, which is not particularly restricted, for example, equal to or less than 80°C, may be equal to or less than 60°C, or may be equal to or less than 50°C.

An aspect of the positive electrode plate at the alkaline liquid immersing step S20 time is not particularly restricted, and thus it may be used as it was in a state at the preparation time. In addition, it may be made to be in a state of being cut according to a scale of a facility, or the like.

### (2) Solid-liquid separation step S30

At the solid-liquid separation step S30, the solid substance is collected from the alkaline liquid after the alkaline liquid immersing step S20. By doing this, it is possible to separate the solid substance containing the positive electrode active material from the alkaline liquid in which the positive electrode current collector is dissolved. As a method for the solid-liquid separation step S30, it is possible to use a conventionally known method, and thus it is possible, for example, to use a collecting method based on a filtration, a centrifugal separation, a decantation, or the like.

### (3) Classifying step S40

At the classifying step S40, the solid substance obtained at the solid-liquid separation step S30 is classified into a fine particle fraction and a coarse particle fraction. The technique disclosed herein is characterized by performing the classifying step S40.

Anyway, the positive electrode active material layer of the positive electrode plate may contain a solid carbon other than the positive electrode active material. The solid carbon can be typically contained as an electrically conducting material. The solid carbon is hardly removed by the alkaline liquid immersing step S20 described above, and thus remains in the solid substance. In addition, if the later described baking step S50 is performed in a state where the solid carbon remains in the solid substance, the solid carbon and a charge carrier in the positive electrode active material respond, and thus there are some fears that the charge carrier in the positive electrode active material desorbs. This may degrade the capacity and output characteristics of the positive electrode active material obtained from the solid substance. Herein, the present inventor paid attention to a fact that the D50 particle diameter of the solid carbon is typically smaller than the D50 particle diameter of the positive electrode active material. In other words, the particle size distribution of the solid carbon is shifted to a small particle diameter side (a fine particle side) more than the particle size distribution of the positive electrode active material. Then, based on a study of the present inventor, it was found that, after the positive electrode current collector was removed, by performing classification on the solid substance before the bake, the solid carbon in the solid content could be classified into the fine particle side and thus physically removed.

At the classifying step S40, it is possible to use a conventionally known classifying means. For example, it is possible to use an elbow jet classifier (a simultaneous multiproduct classifier), a cyclone type classifier, or the like. In addition, at the classifying step S40, it may be a dry type classification or may be a wet type classification. As an example of the wet type classifier used at the classifying step S40, it is possible to use, for example, i-Classifier (SATAKE MultiMix Corporation), or the like.

At the classifying step S40, by setting a classification point so as to adjust the particle diameters of the fine particle fraction and the coarse particle fraction, it is possible to classify the solid carbon of the solid substance to the fine particle fraction side. In some suitable aspects, it is preferable that, while the classification point is set to make the D50 particle diameter of the fine particle fraction be -30% to +10% of the D10 particle diameter of the positive electrode active material contained in the positive electrode composite material layer, the classifying step S40 is performed.

In a case where the classification point is too small, it is not possible to sufficiently remove the solid carbon in the solid substance, and thus there are some fears of remaining many solid carbons in the coarse particle fraction. Thus, from a perspective of suitably removing the solid carbon in the solid substance, the classification point is preferably set to make the D50 particle diameter of the fine particle fraction be equal to or more than -30% of the D10 particle diameter of the positive electrode active material contained in the positive electrode composite material layer, further preferably set to make it be equal to or more than -20%, or furthermore preferably set to make it be equal to or more than -15%. On the other hand, in a case where the classification point is too large, a rate of the positive electrode active material in the fine particle fraction is increased, and thus a collecting rate of the positive electrode active material (a weight of the positive electrode active material (a baked body) obtained after the baking step, with respect to an weight of the positive electrode active material in the collection object) is reduced. Therefore, from a perspective of enhancing the collecting rate of the positive electrode active material, the classification point is preferably set to make the D50 particle diameter of the fine particle fraction be equal to or less than +10% of the D10 particle diameter of the positive electrode active material contained in the positive electrode composite material layer, further preferably set to make it be equal to or less than 0% (in other words, the same as the D10 particle diameter of the positive electrode active material), or furthermore preferably set to make it be equal to or less than -5%.
A method for setting the classification point can perform setting in accordance with a classifier used at the classifying step S40, and can perform setting by, for example, adjusting a mesh of the sieve or a classifying edge distance.

The classification points of the classifying step S40 may be 2, or the classification may be performed with 3 or more classification points. In that case, plural groups may be combined to make the coarse particle fraction or the fine particle fraction.

In some suitable aspects, it is preferable that the D50 particle diameter of the positive electrode active material contained in the positive electrode plate is 0.05 to 25 µm (more preferably, 1 µm to 20 µm) and the D50 particle diameter of the solid carbon contained in the fine particle fraction is 1 to 200 nm (more preferably, 10 to 100 nm). By doing this, it is possible to suitably remove the solid carbon of the solid content at the classifying step S40.

It is preferable to perform a dry process on the solid substance before the classifying step S40. By performing the dry process, the moisture contained in the solid substance is removed, and thus it is possible to efficiently classify the solid substance at the classifying step S40. The drying step can be performed by a conventionally known method, for example, natural drying, heat drying, blast drying, vacuum drying, or the like. In addition, a drying temperature is good if it can remove the moisture contained in the solid substance, and the drying temperature is typically and approximately equal to or more than 100°C, for example, preferably 110 to 250°C.

The classifying step S40 is not a step intended to completely remove the solid carbon from the solid substance. At the classifying step S40, it is good to remove 80% or more of the solid carbon contained in the solid substance, good to remove 90% or more, or good to remove 95% or more.

### (4) Baking step S50

At the baking step S50, the coarse particle fraction obtained at the classifying step S40 is baked (heated). By doing this, it is possible, while removing a binder component (for example, fluorine (F), or the like) remaining in the coarse particle fraction, to promote a crystal growth of the positive electrode active material in the coarse particle fraction. In addition, there is a possibility that a part of the solid carbon remains in the coarse particle fraction. It is also possible to remove the above described solid carbon at the baking step S50. In addition, the herein disclosed technique removes the solid carbon contained in the solid content by the classifying step S40. Thus, at the baking step S50, it is possible to suppress the response of the solid carbon with the charge carrier in the coarse particle fraction.

When a total mass of the coarse particle fraction applied at the baking step S50 is treated as 100 mass%, it is suitable that a content rate of carbon (C)in the coarse particle fraction is equal to or less than 3 mass% (more preferably, equal to or less than 2 mass%, furthermore suitably equal to or less than 1 mass%, or furthermore suitably equal to or less than 0.5 mass%). As the content rate of C in the coarse particle fraction is lower, it can be said that the solid carbon is further suitably removed from the solid substance. In other words, as the content rate of C in the coarse particle fraction is lower, it is possible to further suppress the response of the charge carrier in the coarse particle fraction with the solid carbon at the baking, so as to reduce the desorption of the charge carrier of the positive electrode active material contained in the coarse particle fraction. Therefore, it is possible to obtain the positive electrode active material in which degradation of the initial capacity and the output characteristic is suppressed. Incidentally, "content rate (mass%) of carbon (C)" in the present specification can be obtained by a carbon and sulfur analyzing device.

When a total mass of the coarse particle fraction applied at the baking step S50 is treated as 100 mass%, it is suitable that a content rate of sodium (Na) in the coarse particle fraction is equal to or less than 0.1 mass% (more preferably, equal to or less than 0.07 mass%, or furthermore suitably, equal to or less than 0.04 mass%). It is difficult to remove the Na at the baking step S50, and it may contaminate as an impurity into the positive electrode active material after the manufacture. This may degrade the performance of the electricity storage device. Therefore, the lower the Na content in the coarse particle fraction, the more desirable it is from the viewpoint of suppressing the degradation of the performance of the electricity storage device. Incidentally, "content rate (mass%) of sodium (Na)" in the present specification can be obtained by an ICP (Inductively Coupled Plasma) analysis.

A baking temperature at the baking step S50 (further particularly, a temperature in a heating furnace) is, for example, preferably equal to or more than 600°C, further preferably equal to or more than 700°C, or furthermore preferably equal to or more than 750°C. In a case where the baking temperature is too low (less than 600°C), the binder component (F, or the like) of the coarse particle fraction remains, and thus there are some fears of reducing the output performance of the positive electrode active material after the manufacture. On the other hand, in a case where the baking temperature is too high (more than 1000°C), the crystal growth of the positive electrode active material in the coarse particle fraction progresses too much, and thus there are some fears of reducing the output performance of the positive electrode active material. Thus, the baking temperature at the baking step S50 is, for example, preferably equal to or less than 1000°C, further preferably equal to or less than 900°C, or furthermore preferably equal to or less than 850°C. Thus, in some preferred embodiments, it is preferable to perform the baking step S50 with a temperature range 600°C to 1000°C, or it is further preferable to perform the baking step S50 with the temperature range 700°C to 900°C. By doing this, it is possible, while the crystal growth of the positive electrode active material in the coarse particle fraction is optimized at the baking for the coarse particle fraction, to suitably remove the binder component (the fluorine (F), or the like) of the coarse particle fraction.

The baking step S50 can be performed in the conventionally known heating furnace. In addition, it is preferable that a baking atmosphere at the baking step S50 is made to be an oxygen-containing atmosphere, for example, an oxygen atmosphere or an air atmosphere. An oxygen concentration of the oxygen-containing atmosphere is preferably equal to or more than 10 vol%, or further preferably 18 to 100 vol%.

A baking time at the baking step S50 is different according to an amount of the collection object, or the like, and thus is not particularly restricted. The baking time at the baking step S50 is, for example, preferably 1 hour to 12 hours, or further preferably 2 hours to 8 hours.

The method for manufacturing the positive electrode active material in accordance with the present embodiment has been explained above. As described above, it includes the preparation step S 10, the alkaline liquid immersing step S20, the solid-liquid separation step S30, the classifying step S40, and the baking step S50. In the manufacturing method according to the present embodiment, a particle growth of the positive electrode active material particle is implemented at the baking step S50. Accordingly, the obtained baked body can be used intactly as the positive electrode active material. The positive electrode active material obtained by the herein disclosed manufacturing method can be used similarly to the conventional positive electrode active material. In addition, it is possible to mix the obtained positive electrode active material and a new positive electrode active material so as to use the mixture.

### 3. Another embodiment

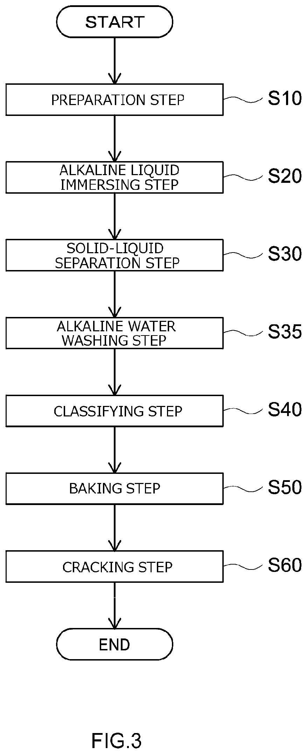

In addition, the herein disclosed technique, which is not restricted to the above described embodiment, semantically covers another embodiment in which various configurations are changed. Below, another embodiment of the herein disclosed technique will be described. FIG. 3 is a flowchart that is for explaining a manufacturing method in accordance with a modified example.

### (1-1) Regarding another step

As shown in FIG. 3, here, it further includes an alkaline water washing step S35 and a cracking step S60, in addition to the above described embodiment. In other words, for the herein disclosed manufacturing method, an arbitrary step can be added, deleted, and changed, as needed. However, in the herein disclosed technique, it is preferable to perform pulverizing neither on the solid substance nor on the coarse particle fraction. If pulverizing is performed on the solid substance and the coarse particle fraction, there are some fears of damaging the crystal structure of the positive electrode active material. Incidentally, the wording "pulverizing" in the present specification represents an operation of making the particle diameter of the particle become further smaller by adding a mechanical energy onto this particle. In addition, the wording "making the particle diameter of the particle become further smaller" represents, for example, a situation where the D50 particle diameter of the particle, after the pulverization, become equal to or less than -20% of the D50 particle diameter of the primary particle of the positive electrode active material contained in the positive electrode plate prepared at the preparation step S10.

### (1-2) Alkaline water washing step S35

In some suitable aspects, when a sodium hydroxide solution is used as the alkaline liquid of the alkaline liquid immersing step S20, it is preferable to further include the alkaline water washing step S35 at which the solid substance obtained at the solid-liquid separation step S30 is subjected to the alkaline water washing. By doing this, it is possible to suitably remove the Na component adhered to the solid substance.

The alkaline liquid used at the alkaline water washing step S35 is not particularly restricted, and thus the sodium hydroxide solution may be used or another alkaline liquid may be used. As said another alkaline liquid, for example, it is possible to use lithium hydroxide, or the like. In a case where the sodium hydroxide solution is used as the alkaline liquid used at the alkaline water washing step S35, a concentration of the sodium hydroxide solution is, from a perspective of removing the Na component adhered to the solid substance, preferably diluted 10 times or more in comparison with the sodium hydroxide solution used at the alkaline liquid immersing step S20, or is preferably diluted 100 times or more. On the other hand, in a case where it is diluted more than 1000 times, the pH is dropped too much, and thus there are some fears of generating desorption of the charge carrier of the positive electrode active material so as to deteriorate the performance of the electricity storage device by doing this. From a perspective described above, compared to the sodium hydroxide solution used at the alkaline liquid immersing step S20, it is preferable to use one diluted 1000 times or less, it is further preferable to use one diluted 500 times or less, or it is particularly preferable to use one diluted 200 times or less.

It is suitable that the pH of the alkaline liquid used at the alkaline water washing step S35 is equal to or more than pH 11 (more preferably, equal to or more than pH 12). In a case where the pH of the alkaline liquid is too low, the desorption of the charge carrier of the positive electrode active material is generated, and thus there are some fears of deteriorating the performance of the electricity storage device by doing this. On the other hand, in a case where the pH of the alkaline liquid is too high, an amount of the alkali metal element in the alkaline liquid is also increased, and thus it is difficult to sufficiently remove the Na component adhered to the solid substance. Accordingly, it is suitable that the pH of the alkaline liquid used at the alkaline water washing step S35 is equal to or less than pH 14 (more preferably, equal to or less than pH 13.5, or furthermore suitably, equal to or less than pH 13). It is preferable that the pH of the alkaline liquid used at the alkaline water washing step S35 is smaller than the pH of the alkaline liquid used at the alkaline liquid immersing step S20.

A washing number of the alkaline water washing step S35 may be 1, or may be plural (equal to or more than 2), which is not particularly restricted because it is possible to adjust in accordance with the Na component adhered to the solid content, or the like. In addition, a temperature of the alkaline liquid used at the alkaline water washing step S35 may be, which is not particularly restricted, for example, equal to or more than 20°C or may be equal to or less than 80°C.

However, the above described alkaline water washing step S35 is not always required. For example, in a case where one, other than the sodium hydroxide solution (lithium hydroxide, potassium hydroxide, or the like), is used as the alkaline liquid of the alkaline liquid immersing step S20, the alkaline water washing step S35 may be omitted.

### (1-3) Cracking step S60

In some preferred embodiment, it is possible to perform a cracking step S60 at which the baked body obtained at the baking step S50 is cracked. The baked body obtained at the baking step S50 may be in a form of a particle aggregate (a massive form) in which further plural secondary particles of the plural positive electrode active materials are aggregated. Here, by performing the cracking step S60, it becomes easy to handle for the positive electrode active material. In the present specification, the wording "cracking" represents an operation of adding a mechanical energy onto the particle aggregate so as to loosen an bond of aggregated particles. Therefore, it is an operation different from "pulverizing" that is for making the particle diameter of the particle become further smaller by adding the mechanical energy.

As a means for the cracking step S60, it is possible to use a conventionally known method, and it is possible to use a method, for example, with a rotary dry type sieve, a ball mill, a low tap ball mill, a vibration ball mill, a planetary ball mill, a rotary cutter mill, a sand mill, or the like.

### (2) About collection object

For example, in the above described embodiment, the positive electrode plate is prepared. However, the present disclosure is not restricted to this, a positive electrode plate having become a non-standard product of the positive electrode plate may be prepared. In addition, at a manufacturing site of the electricity storage device, after the electricity storage device assembly is assembled and before the charge and discharge is performed, some kind of defect may occur and then it may not be used as the product. The positive electrode plate prepared by the herein disclosed manufacturing method may be the positive electrode plate taken out from the electricity storage device assembly as described above. In other words, the electrode plate prepared in the herein disclosed manufacturing method is not particularly restricted to a specific aspect. Incidentally, configurations of the electricity storage device assembly, which are configurations other than the above described positive electrode plate, do not characterize the herein disclosed technique, and thus those explanations are omitted.

Incidentally, the positive electrode plate prepared at the preparation step S10 may be in a state of being after the electrolyte is adhered (for example, a state of being taken out from the electricity storage device). In a case where the positive electrode plate, after the electrolyte is adhered, is prepared, it is good even if the state is still kept in which the electrolyte is adhered or it is good even if the electrolyte adhered to the positive electrode plate is washed out. From a perspective of a work efficiency, it is preferable that the positive electrode plate prepared at the preparation step is in a state of being before the electrolyte is adhered.

### [Test example]

A test example related to the herein disclosed technique would be explained below. Incidentally, contents of the test example described below are not intended to restrict the herein disclosed technique.

### <Manufacture of positive electrode active material>

### (Example 1)

In the present test, a new positive electrode plate (in other words, extracting the charge carrier has never been performed) was prepared as the end material, and a below described step was performed on this positive electrode plate. In particular, as the positive electrode plate, one in which the positive electrode active material layer was arranged on a surface of the positive electrode current collector (an Al foil) having a thickness being 15 µm was prepared. Incidentally, the positive electrode active material layer of the positive electrode plate used in the present test contained LiNi_{1/3}Co_{1/3}Mn_{1/3}O₂ (a lithium nickel cobalt manganese composite oxide) as the positive electrode active material, polyvinylidene fluoride (PVDF) as the binder, and acetylene black (AB) as the electrically conducting material with a mass ratio of positive electrode active material : AB : PVDF = 85 : 10 : 5. In addition, the positive electrode active material contained in the positive electrode active material layer, whose D50 was 5 µm and whose D10 was 1 µm, was used. In addition, the electrically conducting material contained in the positive electrode active material layer, whose D50 was 100 nm, was used.

Incidentally, at the preparation time of the positive electrode plate described above, with respect to the positive electrode plate, the carbon (C) amount of the positive electrode plate was measured by a combustion method and the fluorine (F) amount of the positive electrode plate was measured by an ion chromatography. Then, by making the obtained carbon amount and fluorine amount correspond to the above described mass ratio of the positive electrode active material, AB, and PVDF in the positive electrode active material layer, the positive electrode active material amount in the positive electrode plate was calculated and the calculated result was treated as "positive electrode active material amount contained in the positive electrode plate at the preparation time".

### (Alkaline liquid immersing step)

Next, the prepared positive electrode plate was immersed into a sodium hydroxide (NaOH) solution (concentration being 30 wt%) as the alkaline liquid, and was left for 120 minutes at 40°C, so that the Al foil was dissolved.

### (Solid-liquid separation step)

At the solid-liquid separation step, with respect to the alkaline liquid of the alkaline liquid immersing step and a solid substance being precipitated, a suction filtration was performed to separate the alkaline liquid and the solid substance, so as to collect the solid substance.

### (Alkaline water washing step)

At the alkaline water washing step, with respect to the solid substance collected at the solid-liquid separation step, the wash with the sodium hydroxide solution (concentration being 0.3 wt%) and the suction filtration were further repeated 3 times.

### (Dry process)

In the present test example, with respect to the solid content on which said 3 times washes and the suction filtration were performed, and drying by a drying machine whose drying temperature was set to be 120°C (hereinafter, referred to as "dry process") was performed.

### (Classifying step)

At the classifying step, the elbow jet classifier (Nittetsu Mining Co., Ltd.) was used and the solid substance after drying was classified. In particular, the classifying edge of the classifier was adjusted to make the D50 particle diameter at the fine particle fraction side be -30% of the D10 particle diameter of the positive electrode active material, so as to set the classification point. Then, the solid substance after drying was subjected to two-point-classifying, and thus was classified into the fine particle fraction and the coarse particle fraction. After the classification, the coarse particle fraction was collected and then applied to the baking step.

### (Measuring Na and C content rates in coarse particle fraction)

Incidentally, in the present test example, with respect to the coarse particle fraction before being subjected to the baking step, each of the content rates (mass%) of Na and C in this coarse particle fraction was measured and calculated. Incidentally, the content rate of Na was measured by the ICP analysis, and the content rate of C was measured by a carbon and sulfur analyzing device. The results are shown in a column of "content rate before baking" of Table 2.

### (Baking step)

At the baking step, the coarse particle fraction obtained at the classifying step was baked under an atmospheric condition and under a condition where the baking temperature was 600°C and the baking time was 3 hours. By doing this, the baked body was obtained.

### (Cracking step)

At the cracking step, with respect to the baked body obtained at the baking step, a rotary dry type sieve (turbo screener, Freund-Turbo Corporation) was used so as to perform a cracking process. By doing this, the positive electrode active material in accordance with Example 1 (hereinafter, which may be referred to as "collected positive electrode active material", too) was obtained. After the cracking step, the obtained positive electrode active material was weighed and then a rate (%) of the collected positive electrode active material amount with respect to the positive electrode active material amount contained in the positive electrode plate at the preparation time was treated as "positive electrode active material collecting rate". The results are shown in Table 2.

### (Measuring content rates of F and C in collected positive electrode active material)

Here, the content rates (mass%) of F and C in the collected positive electrode active material were respectively measured and then calculated. Incidentally, the content rate of fluorine (F) was measured by the ion chromatography analysis. In addition, the content rate of C was measured by the carbon and sulfur analyzing device, similarly to the time of the classifying step. The results are shown in a column of "collected positive electrode active material content rate" of Table 2.

### (Example 2)

In Example 2, instead of the sodium hydroxide solution, a lithium hydroxide (LiOH) solution (concentration being 10 wt%) was used to perform an alkaline immersion. After the immersion, the solid substance in the alkaline liquid was collected by the suction filtration. With respect to the obtained solid substance, drying the solid substance was performed, without alkaline washing, under a condition similar to Example 1. After that, an operation similar to Example 1 was performed.

### (Example 3 to Example 6)

In Example 3 to Example 6, the baking steps were performed respectively at the baking temperatures shown in Table 1. Except for them, it was performed similarly to Example 2.

### (Example 7)

In Example 7, the classifying edge of the classifier was adjusted to make the D50 particle diameter at the fine particle fraction side become -20% of the D10 particle diameter of the positive electrode active material so as to set the classification point, and then the classifying step was performed. Except for them, it was performed similarly to Example 4.

### (Example 8)

In Example 8, the classifying edge of the classifier was adjusted to make the D50 particle diameter at the fine particle fraction side become -10% of the D10 particle diameter of the positive electrode active material so as to set the classification point, and then the classifying step was performed. Except for them, it was performed similarly to Example 4.

### (Example 9)

In Example 9, the classifying edge of the classifier was adjusted to make the D50 particle diameter at the fine particle fraction side become 0% of the D10 particle diameter (in other words, which is the same as the D10 particle diameter) of the positive electrode active material, so as to set the classification point, and then the classifying step was performed. Except for them, it was performed similarly to Example 4.

### (Example 10)

In Example 10, the classifying edge of the classifier was adjusted to make the D50 particle diameter at the fine particle fraction side become 10% of the D 10 particle diameter of the positive electrode active material, so as to set the classification point, and then the classifying step was performed. Except for them, it was performed similarly to Example 4.

### (Example 11)

In Example 11, washing the solid substance was performed with water, instead of the sodium hydroxide solution (concentration being 0.3 wt%). Except for them, it was performed similarly to Example 1.

### (Example 12)

In Example 12, orders of the classifying step and the baking step were exchanged among the operations performed in Example 1. In other words, after the baking step was performed, the classifying step was performed on the baked body under a condition the same as Example 1, and then the cracking step was performed on the obtained coarse particle fraction. Except for them, it was performed similarly to Example 1.

### (Example 13)

In Example 13, the cracking step was not performed among the operations performed in Example 12. In other words, the coarse particle fraction obtained at the classifying step was intactly treated as the positive electrode active material in accordance with Example 12, and applied to the measurement of the positive electrode active material collecting rate and to the following evaluation. Except for them, it was performed similarly to Example 12.

### (Example 14)

In Example 14, at first, the positive electrode plate of the end material the same as the Example 1 was prepared, was subjected to a crushing process with a shredder, and was further subjected to a pulverizing process with a pin mill pulverizing machine. After that, the elbow jet classifier was used to perform two-point-classifying on the positive electrode plate after the pulverizing process, and then the resultant was classified into the fine particle fraction and the coarse particle fraction. In particular, the classifying edge of the elbow jet classifier was set to make the D50 particle diameter at the fine particle fraction side become -90% of the D10 particle diameter of the positive electrode active material. After that, the coarse particle fraction was collected, and then the alkaline liquid immersing step, the solid-liquid separation step, the alkaline washing step, and the drying step were performed in this order under a condition similar to Example 1. Then, on the solid substance obtained at the drying step, the baking step and the cracking step were performed under a condition similar to Example 1.

### (Example 15)

In Example 15, the classifying step was not performed among the operations performed in Example 1. In other words, the solid substance obtained after drying was directly applied to the baking step without the classification. Except for them, it was performed similarly to Example 1.

### (Example 16)

In Example 16, the baking step was not performed among the operations performed in Example 1. In other words, the coarse particle fraction obtained at the classifying step was directly applied to the cracking step without the baking. Except for them, it was performed similarly to Example 1.

### <Producing electricity storage device for evaluation>

The collected positive electrode active materials obtained in the above described Example 1 to Example 16 were used so as to produce electricity storage devices for evaluation by a below described procedure.

### (Example 1 to Example 16)

The collected positive electrode active materials obtained in Example 1 to Example 16, the acetylene black (AB) as the electrically conducting material, and the polyvinylidene fluoride (PVDF) as the binder were mixed in N-methylpyrrolidone (NMP) at a mass ratio of collected positive electrode active material : AB : PVDF = 85 : 10 : 5, so as to prepare pastes for forming the positive electrode active material layers. By applying these pastes on the positive electrode current collector bodies (Al foils) whose thicknesses were 15 µm and then drying the resultants, the positive electrode plates were produced.

The natural graphite as the negative electrode active material, the styrene butadiene rubber (SBR) as the binder, and the carboxymethyl cellulose (CMC) as the thickening agent were mixed in an ion exchange water at a mass ratio of natural graphite : SBR : CMC = 98 : 1 : 1, so as to prepare pastes for forming the negative electrode active material layers. By applying these pastes on the Cu foils whose thicknesses were 10 µm and then drying the resultants, the negative electrode plates were produced.

In addition, as the separator sheet, a porous polyolefin sheet, which had a three-layers structure of PP/PE/PP and whose thickness was 20 µm, was prepared.

The above described positive electrode plate, the negative electrode plate, and the separator sheet were stacked, an electrode terminal was attached, and then the resultant was accommodated in a laminate case. Next, a nonaqueous electrolytic solution was injected into the laminate case, and then the laminate case was airtightly sealed. Incidentally, regarding the nonaqueous electrolytic solution, LiPF₆ as the supporting salt was dissolved at a concentration of 1.0 mol/L into a mix solvent containing ethylene carbonate (EC), dimethyl carbonate (DMC), and ethyl methyl carbonate (EMC) at a volume ratio of 3 : 4 : 3, and then the resultant was used. By doing as described above, the electricity storage devices for evaluation in accordance with Example 1 to Example 16 were obtained.

### (Reference example)

Additionally, in order to compare the collected positive electrode active materials in accordance with Example 1 to Example 16 and a new positive electrode active material, the electricity storage device for evaluation in accordance with a reference example was produced. Specifically, the same positive electrode active materials were prepared as in Examples 1 through 16, except that the positive electrode active materials prepared were brand-new. Under a condition made to be similar to the above described condition, except for using the positive electrode active material described above, the electricity storage device for evaluation in accordance with the reference example was produced.

### <Activation and initial capacity measurement>

Each of the above produced electricity storage devices for evaluation was kept under an environment at 25°C. Regarding an activation (a first charge), a constant current and constant voltage method was used so as to perform a constant current charge on each electricity storage device for evaluation at 1/3 C current value till 4.2 V, then a constant voltage charge was performed till the current value became 1/50 C, and thus a full charge state was implemented. After that, each of the electricity storage devices for evaluation was subjected to a constant current electric discharge at 1/3 C current value till 3.0 V. Then, an electric discharge capacity at that time was measured, and thus an initial capacity was obtained. A ratio of the initial capacity of each of the electricity storage devices for evaluation, in which the positive electrode active materials obtained in Example 1 to Example 16 were respectively used, was obtained while the initial capacity of the electricity storage device for evaluation of the reference example was treated as 1. The results are shown in a column of "initial capacity ratio" of Table 2.

### <Output characteristic evaluation>

An activating process was performed on each of the electricity storage devices for evaluation, then SOC was prepared to be 60%, and kept under an environment at -10°C. On this each electricity storage device for evaluation, the electric discharge was performed at 15 C current value for 2 seconds. Based on the voltage and the current value at that time, an output (W) was calculated. A ratio of the output of each of the electricity storage devices for evaluation, in which the positive electrode active materials obtained in Example 1 to Example 16 were respectively used, was obtained while the output of the electricity storage device for evaluation of the reference example was treated as 1. The results are shown in a column of "output ratio" of Table 2.

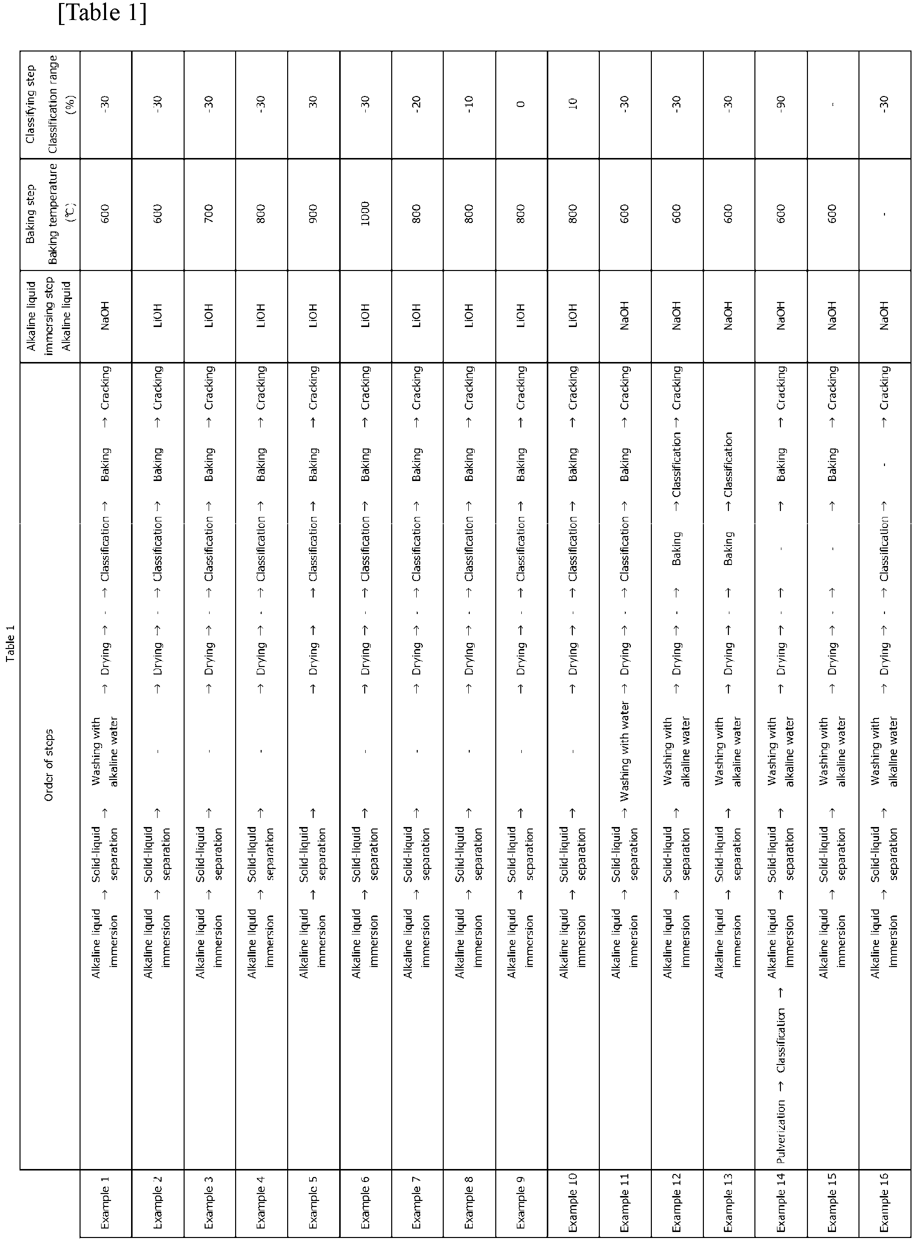

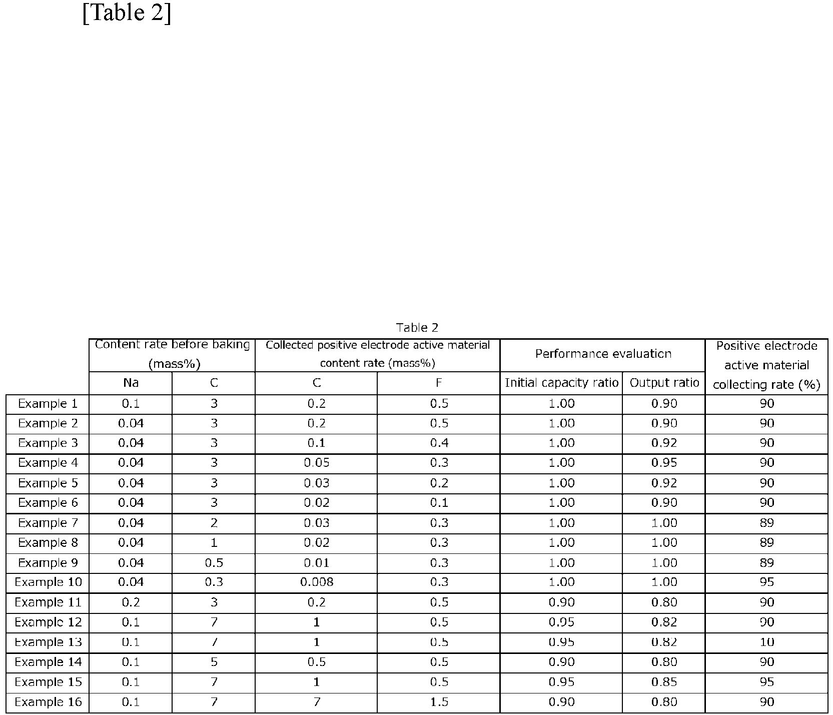

The results in Tables 1 and 2 show that the initial capacity ratio and output ratio are both higher when the end material of the positive electrode plates are subjected to the alkaline liquid immersing step, the solid-liquid separation step, the classifying step, and the baking step. In other words, according to the above described configuration, it was possible to obtain the positive electrode active material while suppressing deteriorations of the initial capacity performance and the output performance.

Above, the herein disclosed technique has been explained in detail, but these are merely illustrations, and are not intended to restrict the scope of claims. The technique recited in claims contains matters in which the above-illustrated specific examples are variously deformed or changed. In other words, the herein disclosed technique semantically covers forms recited in items described below.

### <Item 1>

A method for manufacturing a positive electrode active material, comprising:
a preparation step for preparing an end material of a positive electrode plate (10) containing a positive electrode active material that has never been performing intercalation and deintercalation of a charge carrier;
an alkaline liquid immersing step for immersing the end material into an alkaline liquid;
a solid-liquid separation step for performing a solid-liquid separation on the alkaline liquid after the alkaline liquid immersing step so as to collect a solid substance;
a classifying step for classifying the collected solid substance into a fine particle fraction and a coarse particle fraction; and
a baking step for baking the coarse particle fraction.

### <Item 2>

The manufacturing method recited in item 1, wherein
a content rate of carbon (C) of the coarse particle fraction is equal to or less than 3 mass% when a total mass of the coarse particle fraction applied to the baking step is treated as 100 mass%.

### <Item 3>

The manufacturing method recited in item 1 or 2, wherein
a content rate of sodium (Na) of the coarse particle fraction is equal to or less than 0.1 mass% when a total mass of the coarse particle fraction applied to the baking step is treated as 100 mass%.

### <Item 4>

The manufacturing method recited in any one of items 1 to 3, wherein the alkaline liquid is a lithium hydroxide solution.

### <Item 5>

The manufacturing method recited in any one of items 1 to 3, wherein
the alkaline liquid is a sodium hydroxide solution,
the manufacturing method further comprising:
   an alkaline water washing step for performing an alkaline water wash on the solid substance obtained at the solid-liquid separation step.

### <Item 6>

The manufacturing method recited in any one of items 1 to 5, wherein
the positive electrode plate comprises a positive electrode active material layer that contains the positive electrode active material and comprises a positive electrode current collector, and
when a particle diameter corresponding to a cumulative frequency being 10% is treated as a D10 particle diameter and a particle diameter corresponding to the cumulative frequency being 50% is treated as a D50 particle diameter on a volume basis of a particle size distribution obtained by a laser diffraction scattering method, a classification point is set to make the D50 particle diameter of the fine particle fraction become -30% to +10% of the D10 particle diameter of the positive electrode active material contained in the positive electrode active material layer so as to perform the classifying step.

### <Item 7>

The manufacturing method recited in any one of items 1 to 6, wherein
a solid carbon is contained in the fine particle fraction,
the D50 particle diameter of the positive electrode active material is 0.05 to 25 µm, and
a D50 particle diameter of the solid carbon is 1 to 200 nm.

### <Item 8>

The manufacturing method recited in any one of items 1 to 7, wherein
a baking temperature at the baking step is equal to or more than 600°C and not more than 1000°C.

### <Item 9>

The manufacturing method recited in any one of items 1 to 8, further comprising:
a cracking step for cracking a baked body after the baking step.

## Claims

1. A method for manufacturing a positive electrode active material, comprising:
a preparation step (S10) for preparing an end material of a positive electrode plate (10) containing a positive electrode active material that has never been performing intercalation and deintercalation of a charge carrier;
an alkaline liquid immersing step (S20) for immersing the end material into an alkaline liquid;
a solid-liquid separation step (S30) for performing a solid-liquid separation on the alkaline liquid after the alkaline liquid immersing step (S20) so as to collect a solid substance;
a classifying step (S40) for classifying the collected solid substance into a fine particle fraction and a coarse particle fraction; and
a baking step (S50) for baking the coarse particle fraction.

2. The manufacturing method according to claim 1, wherein
a content rate of carbon (C) of the coarse particle fraction is equal to or less than 3 mass% when a total mass of the coarse particle fraction applied to the baking step (S50) is treated as 100 mass%.

3. The method for manufacturing the positive electrode active material according to claim 1 or 2, wherein
a content rate of sodium (Na) of the coarse particle fraction is equal to or less than 0.1 mass% when a total mass of the coarse particle fraction applied to the baking step (S50) is treated as 100 mass%.

4. The manufacturing method according to any one of claims 1 to 3, wherein
the alkaline liquid is a lithium hydroxide solution.

5. The manufacturing method according to any one of claims 1 to 3, wherein
the alkaline liquid is a sodium hydroxide solution,
the manufacturing method further comprising: an alkaline water washing step (S35) for performing an alkaline water wash on the solid substance obtained at the solid-liquid separation step (S30).

6. The manufacturing method according to any one of claims 1 to 5, wherein
the positive electrode plate (10) comprises a positive electrode active material layer (14) that contains the positive electrode active material and comprises a positive electrode current collector (12), and
when a particle diameter corresponding to a cumulative frequency being 10% is treated as a D10 particle diameter and a particle diameter corresponding to the cumulative frequency being 50% is treated as a D50 particle diameter on a volume basis of a particle size distribution obtained by a laser diffraction scattering method, a classification point is set to make the D50 particle diameter of the fine particle fraction become -30% to +10% of the D10 particle diameter of the positive electrode active material contained in the positive electrode active material layer (14) so as to perform the classifying step (S40).

7. The manufacturing method according to any one of claims 1 to 6, wherein
a solid carbon is contained in the fine particle fraction,
the D50 particle diameter of the positive electrode active material is 0.05 to 25 µm, and
a D50 particle diameter of the solid carbon is 1 to 200 nm.

8. The manufacturing method according to any one of claims 1 to 7, wherein
a baking temperature at the baking step (S50) is equal to or more than 600°C and not more than 1000°C.

9. The manufacturing method according to any one of claims 1 to 8, further comprising:
a cracking step (S60) for cracking a baked body after the baking step (S50).
